(19) Europäisches Patentamt / European Patent Office / Office européen des brevets

(11) **EP 4 276 714 A1**

(12) **EUROPEAN PATENT APPLICATION**
published in accordance with Art. 153(4) EPC

(43) Date of publication:
**15.11.2023 Bulletin 2023/46**

(21) Application number: **21922344.3**

(22) Date of filing: **27.09.2021**

(51) International Patent Classification (IPC):
**G06Q 10/06** *(2023.01)*      **G06N 3/04** *(2023.01)*

(52) Cooperative Patent Classification (CPC):
**G06F 18/00; G06N 3/04; G06Q 10/06**

(86) International application number:
**PCT/CN2021/121050**

(87) International publication number:
**WO 2022/160752 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.01.2021 CN 202110117226**

(71) Applicant: **Huawei Cloud Computing Technologies Co., Ltd. Guizhou 550025 (CN)**

(72) Inventors:
- **HU, Yalong**
  **Shenzhen, Guangdong 518129 (CN)**
- **MAO, Kun**
  **Shenzhen, Guangdong 518129 (CN)**
- **LI, Zhenping**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **OPERATIONS RESEARCH OPTIMIZATION METHOD AND APPARATUS, AND COMPUTING DEVICE**

(57) This application provides an operations research and optimization method, an apparatus, and a computing device, and pertains to the field of artificial intelligence technologies. The method is applied to an operations research and optimization system, and the method includes: obtaining a hyperparameter of an operations research and optimization algorithm based on a feature of data of a current application scenario and a hyperparameter inference model; and performing optimization calculation on the data of the current application scenario according to the operations research and optimization algorithm and based on the obtained hyperparameter of the operations research and optimization algorithm, to obtain a calculation result, where the hyperparameter inference model is obtained through dynamic training based on training data obtained in a historical application scenario and/or training data obtained in the current application scenario. The solutions of this application can adapt to a change of data in an application scenario, ensure accuracy of a result of the operations research and optimization calculation, and improve robustness of the operations research and optimization algorithm; and can reduce development costs of the operations research and optimization system, shorten user waiting time, and improve user experience.

FIG. 5

**Description**

This application claims priority to Chinese Patent Application No. 202110117226.X, filed with the China National Intellectual Property Administration on January 28, 2021 and entitled "OPERATIONS RESEARCH AND OPTIMIZATION METHOD, APPARATUS, AND COMPUTING DEVICE", which is incorporated herein by reference in its entirety.

**TECHNICAL FIELD**

This application relates to the field of artificial intelligence (artificial intelligence, AI) technologies, and in particular, to an operations research and optimization method, an apparatus, and a computing device.

**BACKGROUND**

Operations research is a subject in which optimization ways and schemes of various systems are studied by using mathematical methods, to provide a scientific decision-making basis for decision-makers, and is one of the important methods to realize effective management, correct decision-making and modern management. An operations research and optimization algorithm is widely used in daily life and production practice. With explosive development of technologies such as the internet of things, 5G, artificial intelligence, and digital twins, computing power and algorithms have been greatly improved. Digital development of conventional manufacturing, logistics, and industry has brought massive data, and increasing integration of the three has gradually formed an intelligent manufacturing technical system with "data + computing power + algorithms" as a core. The operations research and optimization algorithm is the core of the technical system. Values of data (such as cost reduction and efficiency improvement) are finally reflected by the operations research and optimization algorithm. In addition, the operations research and optimization algorithm is indispensable and irreplaceable in many industries and fields such as social networking, entertainment, education, transportation, security, industry, logistics, and e-commerce.

Most problems in practical production and decision-making systems are multi-objective combinatorial optimization problems, also known as nondeterministic polynomial (nondeterministic polynomial, NP) problems, or non-convex optimization problems. Two commonly used objectives are efficiency and benefit, but the two cannot be optimal at the same time, and therefore are usually converted to a single objective based on weights.

In an application scenario, when a problem structure of the scenario and/or a weight of a solution target change/changes, the operations research and optimization algorithm (including a hyperparameter and a solution policy of the algorithm) originally designed based on a known problem, a multi-objective weight, and a data feature is prone to be not adapted to a current application scenario. Consequently, it is hard to maintain stable performance and achieve stable optimization results.

To cope with dynamic application scenarios, a user needs to notify development personnel to improve and optimize the algorithm for new application scenarios after finding that the designed operations research and optimization algorithm does not adapt to the new application scenarios. Then, a new algorithm is deployed, tested, and launched. This not only seriously affects user experience, but also affects normal production operations if a core production system is involved. In addition, this significantly increases algorithm research and development and maintenance costs, and causes problems to the user and a service provider.

**SUMMARY**

Embodiments of this application provide an operations research and optimization method, an apparatus, and a computing device, to resolve the foregoing problems. In the operations research and optimization method, a hyperparameter inference model dynamically trained by using training data obtained in a historical application scenario and/or training data obtained in a current application scenario is used, to obtain a hyperparameter of an operations research and optimization algorithm through inference. The method can adapt to a change of the data of the current application scenario, ensure accuracy of an operations research and optimization calculation result, and improve user experience.

According to a first aspect, this application provides an operations research and optimization method, applied to an operations research and optimization system, and the method includes: obtaining data of a current application scenario and a feature of the data; obtaining a hyperparameter of an operations research and optimization algorithm based on the feature of the data and a hyperparameter inference model; and performing operations research and optimization calculation on the data of the current application scenario by using the hyperparameter and the operations research and optimization algorithm, to obtain a calculation result.

The hyperparameter inference model is obtained through dynamic training based on training data obtained in a historical application scenario and/or training data obtained in the current application scenario.

According to the operations research and optimization method shown in this application, the hyperparameter of the operations research and optimization algorithm is obtained by using the hyperparameter inference model obtained through dynamic training. This can actively adapt to a change of the data of the current application scenario, maintain accuracy of an operations research and optimization calculation result, and further improve efficiency of the operations research and optimization.

In a possible implementation, the obtaining a hyperparameter of an operations research and optimization algorithm based on the feature of the data and a hyperparameter inference model includes:
inputting the feature of the data to the hyperparameter inference model, and obtaining, based on inference of the hyperparameter inference model, the hyperparameter of the operations research and optimization algorithm that corresponds to the feature of the data.

The hyperparameter of the operations research and optimization algorithm is obtained by using the hyperparameter inference model, so that costs of algorithm development are reduced, user waiting time is shortened, and user experience is improved.

In a possible implementation, the method further includes: analyzing the feature of the data, and determining that the data of the current application scenario is abnormal data, where the feature of the data includes one or more of the following features: distribution of the data, a user weight preference parameter in the data, and a problem structure parameter of the data.

In a possible implementation, the method further includes: analyzing the calculation result; and when goodness of the calculation result does not meet a preset condition, determining that the data of the current application scenario is abnormal data.

It is determined, by using the feature of the data and/or the calculation result, that the data of the application scenario is abnormal data, so that a change of the data of the application scenario can be discovered in time. This ensures accuracy of the operations research and optimization calculation.

In a possible implementation, the method further includes: optimizing the hyperparameter of the operations research and optimization algorithm by using a hyperparameter optimization algorithm, to obtain an optimized hyperparameter and an optimized calculation result.

The optimized hyperparameter and the calculation result are obtained through hyperparameter optimization. This provides the optimized hyperparameter for updating the hyperparameter inference model, ensures accuracy of the operations research and optimization calculation, and provides the accurate operations research and optimization calculation result for a user.

In a possible implementation, the method further includes: recording the abnormal data and the optimized calculation result corresponding to the abnormal data into a training data set used to train the hyperparameter inference model.

In a possible implementation, the method further includes: determining that the hyperparameter inference model is to be updated, and training the hyperparameter inference model based on training data in the training data set, to obtain an updated hyperparameter inference model.

The new parameter is obtained by optimizing the hyperparameter, and then the hyperparameter inference model is updated, so that a problem that the hyperparameter obtained through inference based on the hyperparameter inference model does not match a scenario due to a scenario change can be resolved. Therefore, solution efficiency and goodness of an optimization result can be maintained without decreasing, and robustness of the operations research and optimization is improved.

In a possible implementation, the obtaining data of a current application scenario and a feature of the data includes: obtaining the data of the current application scenario that is uploaded by a user through a user interface or an application programming interface; and performing feature extraction on the data of the current application scenario, to obtain the feature of the data.

The data of the current application scenario that is uploaded by the user is obtained through the user interface or the application programming interface, and feature extraction is performed, so that the user can use the operations research and optimization system more conveniently.

In a possible implementation, the method further includes: obtaining an operations research and optimization task type configured by the user; and determining the operations research and optimization algorithm based on the task type.

According to a second aspect, this application further provides a hyperparameter optimization method for an operations research and optimization algorithm. The method includes: obtaining a feature of data of a current application scenario, and a calculation result obtained by performing operations research and optimization calculation on the data of the current application scenario according to the operations research and optimization algorithm and based on a hyperparameter of the operations research and optimization algorithm; determining, based on the feature of the data of the current application scenario or the calculation result, that the hyperparameter of the operations research and optimization algorithm is to be optimized; and optimizing the hyperparameter of the operations research and optimization algorithm by using a hyperparameter optimization algorithm, to obtain an optimized hyperparameter.

Whether the operations research and optimization algorithm needs to be optimized may be determined by using the feature of the data and the calculation result. When optimization is required, the optimized hyperparameter is obtained by using hyperparameter optimization, and the obtained hyperparameter of the operations research and optimization algorithm better matches the data of the current application scenario. This ensures accuracy of optimization calculation by the operations research and optimization algorithm.

In a possible implementation, the determining, based on the feature of the data of the current application scenario or the calculation result, that the hyperparameter of the operations research and optimization algorithm is to be optimized includes: if the feature of the data of the current application scenario fails to be matched with a feature of data in a training data set used to train a hyperparameter inference model, determining that the hyperparameter of the operations research and optimization algorithm is to be optimized; or if goodness of the calculation result does not meet a preset condition, determining that the hyperparameter of the operations research and optimization algorithm is to be optimized.

In the foregoing method, it may be determined, by comparing the feature of the data with the feature of the historical data, or by analyzing the goodness of the calculation result and the preset condition, that the hyperparameter of the operations research and optimization algorithm needs to be optimized. This ensures accuracy of the operations research and optimization and improves user experience.

In a possible implementation, the hyperparameter of the operations research and optimization algorithm is obtained by performing inference by using the hyperparameter inference model based on the feature of the data of the current application scenario.

In the foregoing method, the hyperparameter of the operations research and optimization algorithm is obtained by using the hyperparameter inference model, so that development costs of the operations research and optimization algorithm can be reduced, user waiting time is shortened, and user experience is improved.

In a possible implementation, the method further includes: recording the feature of the data of the current application scenario and the optimized hyperparameter into the training data set used to train the hyperparameter inference model.

In a possible implementation, the method further includes: determining that the hyperparameter inference model is to be updated, and training the hyperparameter inference model based on training data in the training data set, to obtain an updated hyperparameter inference model.

According to the hyperparameter optimization method shown in this application, the hyperparameter inference model is updated by using the data in the training data set, so that the hyperparameter inference model can adapt to a change of the data of the application scenario, to obtain a more accurate hyperparameter. This ensures accuracy of the operations research and optimization calculation, and improves user experience.

According to a third aspect, this application further provides an operations research and optimization system. The operations research and optimization system includes: a calculation module, configured to obtain data of a current application scenario and a feature of the data; and a hyperparameter configuration module, configured to obtain a hyperparameter of an operations research and optimization algorithm based on the feature of the data and a hyperparameter inference model, where the calculation module is further configured to perform operations research and optimization calculation on the data of the current application scenario by using the hyperparameter and the operations research and optimization algorithm, to obtain a calculation result.

The hyperparameter inference model is obtained through dynamic training based on training data obtained in a historical application scenario and/or training data obtained in the current application scenario.

In a possible implementation, the hyperparameter configuration module is specifically configured to: input the feature of the data to the hyperparameter inference model, and obtain, based on inference of the hyperparameter inference model, the hyperparameter of the operations research and optimization algorithm that corresponds to the feature of the data.

In a possible implementation, the hyperparameter configuration module is further configured to: analyze the feature of the data, and determine that the data of the current application scenario is abnormal data, where the feature of the data includes one or more of the following features: distribution of the data, a user weight preference parameter in the data, and a problem structure parameter of the data.

In a possible implementation, the hyperparameter configuration module is further configured to: analyze the calculation result; and when goodness of the calculation result does not meet a preset condition, determine that the data of the current application scenario is abnormal data.

In a possible implementation, the hyperparameter configuration module is further configured to: optimize the hyperparameter of the operations research and optimization algorithm by using a hyperparameter optimization algorithm, to obtain an optimized hyperparameter and an optimized calculation result.

In a possible implementation, the hyperparameter configuration module is further configured to: record the abnormal data and the optimized calculation result corresponding to the abnormal data into a training data set used to train the hyperparameter inference model.

In a possible implementation, the hyperparameter configuration module is further configured to: determine that the hyperparameter inference model is to be updated, and train the hyperparameter inference model based on training data in the training data set, to obtain an updated hyperparameter inference model.

In a possible implementation, the calculation module is specifically configured to: obtain the data of the current application scenario that is uploaded by a user through a user interface or an application programming interface; and perform feature extraction on the data of the current application scenario, to obtain the feature of the data.

In a possible implementation, the calculation module is further configured to: obtain an operations research and optimization task type configured by the user; and determine the operations research and optimization algorithm based on the task type.

According to a fourth aspect, this application further provides a hyperparameter optimization apparatus for an operations research and optimization algorithm. The apparatus includes: an obtaining unit, configured to obtain a feature of data of a current application scenario, and a calculation result obtained by performing operations research and optimization calculation on the data of the current application scenario according to an operations research and optimization algorithm and a hyperparameter of the operations research and optimization algorithm; an identification unit, configured to determine, based on the feature of the data of the current application scenario or the calculation result, that the hyperparameter of the operations research and optimization algorithm is to be optimized; and a hyperparameter optimization unit, configured to optimize the hyperparameter of the operations research and optimization algorithm by using a hyperparameter optimization algorithm, to obtain an optimized hyperparameter.

In a possible implementation, the identification unit is specifically configured to: if the feature of the data of the current application scenario fails to be matched with a feature of data in a training data set used to train a hyperparameter inference model, determine that the hyperparameter of the operations research and optimization algorithm is to be optimized; or if goodness of the calculation result does not meet a preset condition, determine that the hyperparameter of the operations research and optimization algorithm is to be optimized.

In a possible implementation, the hyperparameter of the operations research and optimization algorithm is obtained by performing inference by using the hyperparameter inference model based on the feature of the data of the current application scenario.

In a possible implementation, the identification unit is further configured to record the feature of the data of the current application scenario and the optimized hyperparameter into the training data set used to train the hyperparameter inference model.

In a possible implementation, the hyperparameter optimization apparatus further includes: a model updating unit, configured to: determine that the hyperparameter inference model is to be updated, and train the hyperparameter inference model based on training data in the training data set, to obtain an updated hyperparameter inference model.

According to a fifth aspect, this application further provides a computing device. The computing device includes a memory and a processor. The memory is configured to store computer instructions, and the processor executes the computer instructions stored in the memory, to implement the method in the first aspect and the possible implementations of the first aspect, or implement the second aspect and the possible implementations of the second aspect.

According to a sixth aspect, this application further provides a computer-readable storage medium. The computer-readable storage medium stores computer program code. When the computer program code is executed by a computing device, the computing device performs the method in the first aspect and the possible implementations of the first aspect, or performs the method in the second aspect and the possible implementations of the second aspect, or enables the computing device to implement functions of the apparatus in the third aspect and the possible implementations of the third aspect, or enables the computing device to implement functions of the apparatus in the fourth aspect and the possible implementations of the fourth aspect.

According to a seventh aspect, this application further provides a computer program product. When the computer program product runs on a computing device, the computing device performs the method in the first aspect and the possible implementations of the first aspect, or performs the method in the second aspect and the possible implementations of the second aspect.

Any apparatus, computer storage medium, or computer program product provided above is configured to perform the method provided above. Therefore, for beneficial effects that can be achieved by the apparatus, computer storage medium, or computer program product, refer to the beneficial effects of the corresponding solution in the corresponding method provided above. Details are not described herein again.

**BRIEF DESCRIPTION OF DRAWINGS**

FIG. 1 is a schematic diagram of a structure of an operations research and optimization system according to an embodiment of this application;

FIG. 2 is a schematic diagram of an application scenario of an operations research and optimization system according to an embodiment of this application;

FIG. 3 is a schematic diagram of an application scenario of another operations research and optimization system according to an embodiment of this application;

FIG. 4 is a schematic diagram of a structure of hardware of a computing device on which an operations research and optimization system is deployed according to an embodiment of this application;

FIG. 5 is a flowchart of an operations research and optimization method according to an embodiment of this application;

FIG. 6 is a schematic diagram of a structure of an operations research and optimization algorithm according to an embodiment of this application;

FIG. 7 is a flowchart of training a hyperparameter inference model according to an embodiment of this application;

FIG. 8 is a flowchart of a hyperparameter optimization method for an operations research and optimization algorithm according to this application;

FIG. 9 is a schematic diagram of a structure of a hyperparameter optimization apparatus for an operations research and optimization algorithm according to an embodiment of this application; and

FIG. 10 is a schematic diagram of a structure of hardware of a computing device on which a hyperparameter optimization apparatus is deployed according to an embodiment of this application.

## DESCRIPTION OF EMBODIMENTS

To make objectives, technical solutions, and advantages of embodiments of this application clearer, the following describes the technical solutions in embodiments of this application with reference to the accompanying drawings.

In the descriptions of this embodiment of this application, words such as "example" and "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

In the descriptions of this embodiment of this application, the term "and/or" describes only an association relationship for describing associated objects and represents that three relationships may exist. For example, A and/or B may represent the following three cases: Only A exists, both A and B exist, and only B exists. In addition, unless otherwise specified, the term "a plurality" means two or more. For example, a plurality of systems refer to two or more systems, and a plurality of screen terminals refer to two or more screen terminals. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

Moreover, the terms "first" and "second" are merely intended for a purpose of description, and shall not be understood as an indication or implication of relative importance or implicit indication of an indicated technical feature. Therefore, a feature limited to "first" and "second" may explicitly or implicitly include one or more of the features. The terms "include", "have", and their variants all mean "include but are not limited to", unless otherwise specifically emphasized in another manner.

To facilitate understanding of the technical solutions and embodiments provided in this application, concepts of operations research and optimization, an operations research and optimization algorithm, and an operations research and optimization system are described in detail below.

The operations research and optimization (operations research and optimization) is mainly used to study use and planning of various resources by a user, to maximize benefits of limited resources and achieve an overall optimal goal under specific constraints, and is often used to resolve complex problems in the real life field (for example, warehousing, logistics, or workshop scheduling).

The operations research and optimization algorithm is a tool to perform operations research and optimization in various fields and resolve complex problems. Herein, the operations research and optimization algorithm is usually a heuristic algorithm. The heuristic algorithm is a kind of algorithm based on intuitive or empirical construction, to give a feasible solution for each instance of a combinatorial optimization problem to be resolved at acceptable costs (referring to computing time, occupied space, or the like). The heuristic algorithm is generally divided into three categories: a simple heuristic algorithm, a metaheuristic algorithm and a hyper-heuristic algorithm. The simple heuristic algorithm includes a greedy algorithm (greedy algorithm, GA) and a method of climbing (method of climbing, MC). The metaheuristic algorithm is an improvement of the simple heuristic algorithm, and is a product of combining a randomized algorithm and a local searching algorithm. Commonly used metaheuristic algorithms include: a simulated annealing algorithm (simulated annealing algorithm, SAA), a genetic algorithm (genetic algorithm, GA), evolution programming (evolution programming, EP), an evolution strategy (evolution strategy, ES), an ant colony optimization (ant colony optimization, ACO), and an artificial neural network (artificial neural network, ANN). The hyper-heuristic algorithm is a high-level heuristic algorithm. A new heuristic algorithm is generated by managing or manipulating a series of low-level heuristic algorithms, and the new heuristic algorithm is used to resolve various NP problems. According to different high-level policy mechanisms, the hyper-heuristic algorithm can be roughly divided into four categories: a random selection-based hyper-heuristic algorithm, a greedy policy-based hyper-heuristic algorithm, a metaheuristic-based hyper-heuristic algorithm, or a learning-based hyper-heuristic algorithm.

The operations research and optimization system is a platform that uses the operations research and optimization algorithm to resolve operations research and optimization problems in specific scenarios for the user. Various operations research and optimization algorithms for resolving different problems can be built in the operations research and optimization system. The user uploads data of an application scenario and configures an operations research and optimization task in the operations research and optimization system. The operations research and optimization system can use an algorithm to perform optimization calculation, to obtain a calculation result of the data of the application scenario.

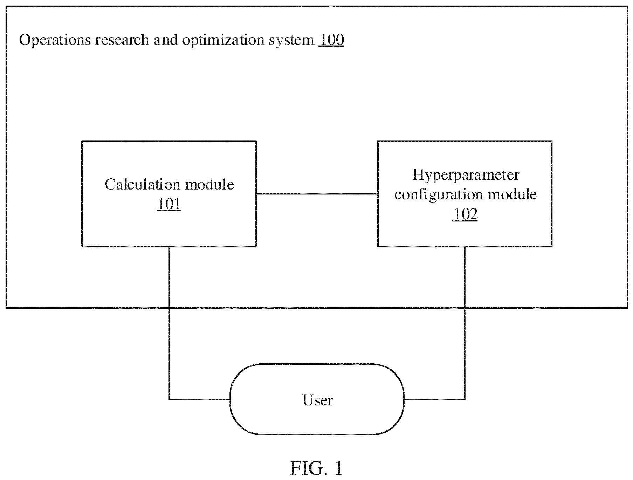

FIG. 1 is a schematic diagram of a structure of an operations research and optimization system according to an embodiment of this application. It should be understood that FIG. 1 is a schematic diagram of an example of a structure of the operations research and optimization system. Structure division in the operations research and optimization system is not limited in this application. As shown in FIG. 1, the operations research and optimization system 100 includes: a calculation module 101 and a hyperparameter configuration module 102, and optionally, may further include a storage module 103 (not shown in FIG. 1). The operations research and optimization system 100 may provide an operations research and optimization service and a hyperparameter optimization service of an operations research and optimization algorithm for a user.

The operations research and optimization system may be a ModelArts platform. The ModelArts platform is a one-stop AI development platform that can provide end-to-end AI development services, including massive data processing, training, device-edge-cloud model deployment, O&M management, helping a user quickly create and deploy a model, and managing full-cycle AI workflows. The ModelArts platform has characteristics of smooth, stable and reliable operation.

Functions of each module in the operations research and optimization system 100 are briefly described below.

In one aspect, the calculation module 101 is configured to obtain an operations research and optimization calculation task configured by a user through a graphical user interface (graphical user interface, GUI) or an application programming interface (application programming interface, API) and uploaded data of an application scenario in which an operations research and optimization calculation needs to be performed. In another aspect, the calculation module 101 is further configured to feed back a calculation result of the application scenario to the user through the user interface or the API.

Optionally, the operations research and optimization calculation task configured by the user through the GUI or the API may include: limitation parameters used when the operations research and optimization system 100 performs operations research and optimization calculation for a current application scenario, for example, time priority or performance priority, a type of the application scenario, and preference weights of different problems in the application scenario.

After obtaining the data of the application scenario uploaded by the user, the calculation module 101 performs operations research and optimization calculation on the data of the application scenario according to the operations research and optimization algorithm and based on the hyperparameter of the operations research and optimization algorithm and the limitation parameters set by the user; and feeds back the calculation result obtained through the operations research and optimization calculation to the user through the GUI or API. The hyperparameter of the operations research and optimization algorithm is a parameter preset before the operations research and optimization algorithm performs a training or inference process, and the hyperparameter cannot be obtained by training the operations research and optimization algorithm.

The calculation module 101 is further configured to: send the data of the application scenario to the hyperparameter configuration module 102, obtain, from the hyperparameter configuration module 102, a hyperparameter of the operations research and optimization algorithm that corresponds to the data of the application scenario, and send the calculation result corresponding to the application scenario to the hyperparameter configuration module 102, where the calculation result is used for the hyperparameter configuration module 102 to perform self-learning update.

Optionally, the calculation module 101 is further configured to provide an operations research and optimization algorithm group construction service for the user. In a development phase of the operations research and optimization system, the user may select the operations research and optimization algorithm from an existing operations research and optimization algorithm template library through the GUI or the API; and/or edit and upload, based on an algorithm template provided by the calculation module 101, an operations research and optimization algorithm file of the user, and a hyperparameter type and a value range corresponding to the operations research and optimization algorithm; and built an operations research and optimization algorithm library for a specific application scenario.

The hyperparameter configuration module 102 communicates with the calculation module 101. The hyperparameter configuration module 102 performs inference based on a feature of data of the current application scenario and a pre-trained hyperparameter inference model, obtains a hyperparameter of an operations research and optimization algorithm, and feeds back the hyperparameter to the calculation module 101 for the operations research and optimization calculation. The hyperparameter configuration module 102 further determines, based on the feature of the data of the current application scenario and the calculation result fed back by the calculation module 101, whether the data of the current application scenario is adapted to the hyperparameter inference model; and when the data is not adapted to the hyperparameter inference model, optimizes, by using a hyperparameter optimization algorithm, a hyperparameter obtained through inference, and updates the pre-trained hyperparameter inference model based on the optimized hyperparameter, so that the hyperparameter inference model adapts to the data of the application scenario, and accuracy of obtaining the hyperparameter is improved. The hyperparameter optimization algorithm may be a hyperparameter optimization algorithm selected by the user from the existing hyperparameter optimization algorithm library through the GUI or the API, or may be a hyperparameter optimization algorithm edited and uploaded by the user by using the algorithm template provided by the calculation module 101.

The hyperparameter configuration module 102 is further configured to: when it is determined that the pre-trained hyperparameter inference model needs to be updated, send a notification to the user through the GUI or the API; optimize the hyperparameter and update the parameter inference model according to an update instruction fed back by the user; and after the update is completed, send an updated calculation result to the user through the GUI or the API. The updated calculation result is obtained by performing optimization calculation on the data of the application scenario by using the hyperparameter optimization algorithm. The update instruction includes a hyperparameter optimization calculation task configured by the user through the GUI or the API.

Optionally, the hyperparameter optimization calculation task configured by the user through the GUI or the API may include: a range of the hyperparameter that is of the corresponding operations research and optimization algorithm and that is of a historical application scenario (for example, a hyperparameter of a genetic algorithm may include a population size, a mutation rate, and algorithm termination algebra); and limitation parameters (for example, optimization time and iteration times of the hyperparameter optimization algorithm) when the operations research and optimization system 100 performs hyperparameter optimization.

Optionally, the user may further set other results that are output by the hyperparameter optimization algorithm except the updated hyperparameter and the calculation result, for example: average running time of the hyperparameter optimization algorithm on the data of the current application scenario, average goodness of a calculation result after each iteration, and a variance of the updated calculation result.

Optionally, the hyperparameter configuration module 102 may further independently provide a hyperparameter optimization service for the user, that is, the user may actively configure a hyperparameter optimization calculation task through the GUI or the API to optimize a hyperparameter that is of a corresponding operations research and optimization algorithm and that is of a historical application scenario.

Optionally, the hyperparameter configuration module 102 may further provide a hyperparameter optimization algorithm group construction service for the user. That is, after the hyperparameter optimization calculation task is configured, the user may further upload the hyperparameter optimization algorithm file of the user through the GUI or API, specify one or more hyperparameter optimization algorithms in the existing hyperparameter optimization algorithm library to optimize the hyperparameter of the operations research and optimization algorithm that corresponds to the data of the application scenario. The hyperparameter optimization algorithm may be one or more of the following algorithms: grid search, Bayesian optimization, random search, and gradient-based optimization. The hyperparameter optimization algorithm is not specifically limited in this embodiment of this application.

The storage module 103 separately communicates with the calculation module 101 and the hyperparameter configuration module 102. The storage module 103 is configured to store the data of the historical application scenario, the operations research and optimization algorithm, the hyperparameter optimization algorithm, the hyperparameter inference model, a training data set for training the hyperparameter inference model, a calculation result of the operations research and optimization calculation, the limitation parameters set by the user, and the like.

Optionally, the storage module 103 may be a data storage service (object storage service, OBS) provided by a cloud service provider.

Based on functions of the foregoing modules, the operations research and optimization system provided in this embodiment of this application can adapt to the data of the changing application scenario and the application scenario, and maintain accuracy of the calculation result of the operations research and optimization.

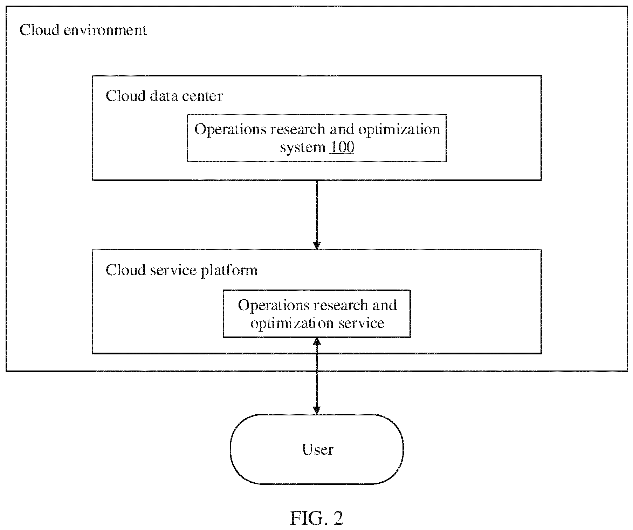

FIG. 2 is a schematic diagram of an application scenario of an operations research and optimization system 100 according to an embodiment of this application.

As shown in FIG. 2, in one embodiment, the operations research and optimization system 100 may be fully deployed in a cloud environment. The cloud environment is an entity that uses basic resources to provide cloud services for users in a cloud computing mode. The cloud environment includes a cloud data center and a cloud service platform. A cloud data center includes a large quantity of basic resources owned by a cloud service provider, including computing resources, storage resources, and communication resources. The operations research and optimization system 100 may be independently deployed on a server or virtual machine in the cloud data center, or may be deployed in a distributed manner on a plurality of servers in the cloud data center, or deployed in a distributed manner on a plurality of virtual machines in the cloud data center, or deployed in a distributed manner on a server and virtual machine in the cloud data center. As shown in FIG. 2, the operations research and optimization system 100 is abstracted by the cloud service provider into an operations research and optimization service on a cloud service platform and provided to a user. After the user purchases the cloud service on the cloud service platform (the user may recharge an account in advance and then perform settlement based on final status of resource usage), the cloud environment provides the operations research and optimization service for the user by using the operations research and optimization system 100 deployed in the cloud data center. When using the operations research and optimization service, the user may upload the data of the application scenario to the cloud environment through the GUI or the API, and determine a task (including an operations research and optimization calculation task and a hyperparameter optimization calculation task) that needs to be completed by the operations research and optimization system 100. The operations research and optimization system 100 in the cloud environment receives task information of the user and the scenario data, and executes the corresponding task after data preprocessing. The operations research and optimization system 100 feeds back a task result, that is, the calculation result of the operations research and optimization calculation or a calculation result of hyperparameter optimization calculation, to the user through the API or the GUI. For example, the application scenario that is a vehicle routing problem (vehicle routing problem, VRP). In the VRP scenario, a driving route that meets a specific constraint condition is organized based on information of each node, so that a vehicle sequentially passes through each node. Data of the VRP scenario includes information such as a position and a distance of each node. When receiving the data of the foregoing scenario, the operations research and optimization system 100 performs operations research and optimization calculation for the scenario, and feeds back a vehicle driving route obtained through calculation to the user through the API or the GUI.

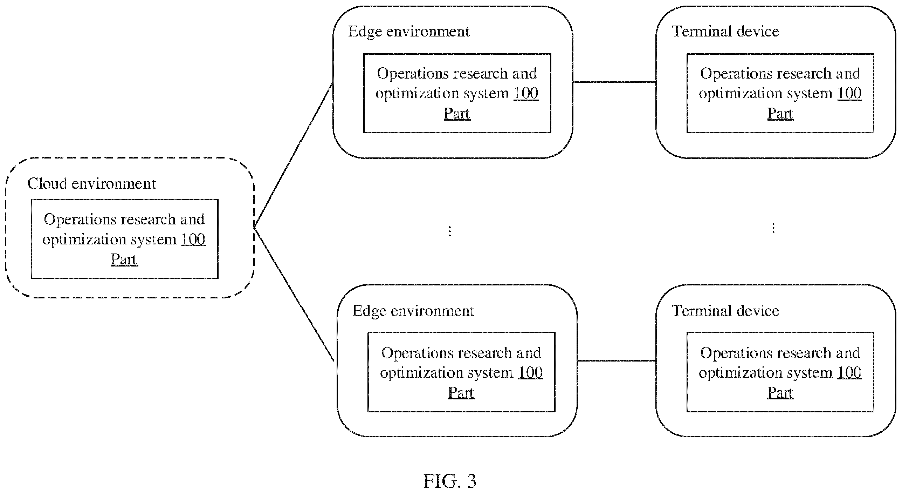

Deployment of the operations research and optimization system 100 provided in this application is flexible. As shown in FIG. 3, in another embodiment, the operations research and optimization system 100 provided in this application may be further deployed in different environments in a distributed manner. The operations research and optimization system 100 provided in this application may be logically divided into a plurality of parts, and each part performs a different function. For example, modules of the operations research and optimization system 100 shown in FIG. 1 may be separately deployed in any two or three of a terminal device, an edge environment, and a cloud environment. The terminal device includes a terminal server, a smartphone, a notebook computer, a tablet computer, a personal desktop computer, an intelligent camera, or the like. The edge environment is an environment that includes a set of edge computing devices that are close to the terminal device, and the edge computing device includes: an edge server, an edge station with computing power, or the like. Modules of the operations research and optimization system 100 deployed in different environments or devices collaborate to provide a function such as training an AI model for a user. In an embodiment, the calculation module 101 may be further divided into an obtaining unit 1011 and a calculation unit 1012. The obtaining unit 1011 of the calculation module 101 of the operations research and optimization system 100 is deployed in the terminal device. The calculation unit 1012 in the calculation module 101 and the hyperparameter configuration module 102 are deployed in the edge environment. The storage module 103 is deployed in the cloud environment. The user sends the scenario data and the configured task to the terminal device, and the terminal device sends the scenario data and the configured task to the calculation unit 1012 and/or the hyperparameter configuration module 102 in the cloud environment, to perform operations research and optimization calculation and/or hyperparameter optimization calculation. It should be understood that, in this application, no restrictive division is performed on a specific environment or device in which parts of the operations research and optimization system 100 are deployed. In an actual application moment, adaptive deployment is performed based on a computing capability of the terminal device, a resource occupation status of the edge environment and the cloud environment, or a specific application requirement.

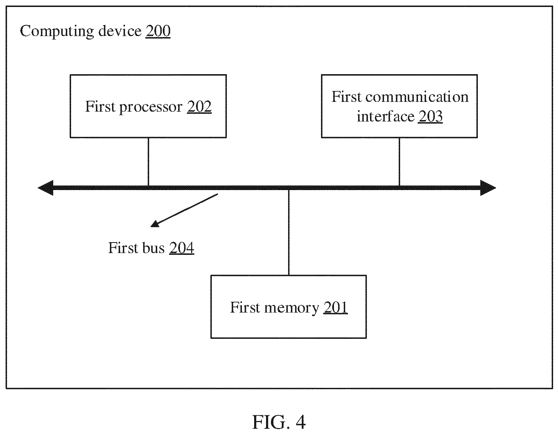

Alternatively, the operations research and optimization system 100 may be independently deployed on a computing device in any environment, for example, independently deployed on a server in a cloud environment. FIG. 4 is a schematic diagram of a structure of hardware of a computing device 200 on which an operations research and optimization system 100 is deployed. As shown in FIG. 4, the computing device 200 includes a first memory 201, a first processor 202, a first communication interface 203, and a first bus 204. The first memory 201, the first processor 202, and the first communication interface 203 implement a communication connection to each other by using the first bus 204.

The first memory 201 may be one or any combination of a read only memory (read only memory, ROM), a random access memory (random access memory, RAM), a hard disk, and a flash memory. The first memory 201 may store a program. When the program stored in the first memory 201 is executed by the first processor 202, the first processor 202 and the first communication interface 203 are configured to perform a method for providing an operations research and optimization service for a user by the operations research and optimization system 100. The first memory 201 may further store data of an operations research and optimization scenario and data such as a feature of the data, an operations research and optimization algorithm, a hyperparameter optimization algorithm, and an optimized calculation result.

The first processor 202 may be a central processing unit (central processing unit, CPU), an application-specific integrated circuit (application-specific integrated circuit, ASIC), a GPU, or any combination thereof. The first processor 202 may include one or more chips. The first processor 202 may include an AI accelerator, for example, a neural network processing unit (neural processing unit, NPU).

The first communication interface 203 uses a transceiver module, for example, a transceiver, to implement communication between the computing device 200 and another device or a communication network.

The first bus 204 may include a path for transmitting information between components (for example, the first memory 201, the first processor 202, and the first communication interface 203) of the computing device 200.

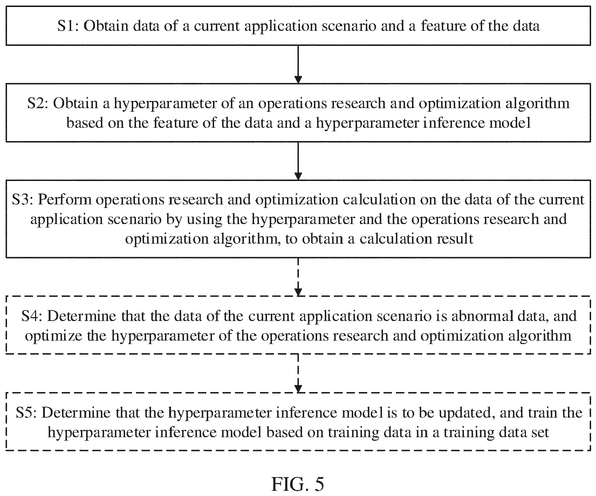

The following describes a specific procedure of an operations research and optimization method in an embodiment with reference to FIG. 5. An example in which the method is executed by an operations research and optimization system is used for description.

As shown in FIG. 5, the operations research and optimization method includes step S1 to step S5.

In step S1, the operations research and optimization system 100 obtains data of a current application scenario that is uploaded by a user, and performs feature extraction on the data of the scenario to obtain a feature of the data.

In this embodiment of this application, when the user needs to perform operations research and optimization calculation on data of an application scenario, the user uploads the data of the application scenario through a GUI or an API, and configures an operations research and optimization calculation task. In a possible implementation, the user may further obtain the data of the application scenario by using a data generation function provided by the operations research and optimization system 100. That is, the user may select a feature of stored data of a historical application scenario through the GUI or the API, and then configure a data generation task. The operations research and optimization system 100 generates data of a current application scenario by using a random generation algorithm, a GAN adversarial generation method, or a data sampling method based on the feature of the data that is selected by the user and the stored data of the historical application scenario. When the GAN adversarial generation method is used, a GAN adversarial model needs to be trained based on the data of the historical application scenario. The data sampling method is also used to sample the data of the historical application scenario. Specifically, the feature of the data includes one or more of the following features: distribution of the data, a user weight preference parameter in the data, and a problem structure parameter of the data. The foregoing VRP scenario is used as an example. Distribution of data of the VRP scenario includes: a quantity of nodes, a percentage of goods in a vehicle to a vehicle capacity, an average distance between nodes, a distance variance between nodes, an average distance between a node and a warehouse, and a distance variance between a node and a warehouse. A user weight preference parameter in the data of the VRP scenario may be a preference coefficient preset by the user based on an importance degree of each node. Table 1 lists problem structure parameters in the VRP scenario.

**Table 1 Problem structure parameters of the data of the VRP scenario**

| Problem number | Problem name | Problem description | Problem number | Problem name | Problem description |
|---|---|---|---|---|---|
| 1 | VRP/CVRP | Capacity | 18 | LDVRP | Load Dependent Cost |
| 2 | AVRP | Asymmetric distance | 19 | LDVRPTW | Load Dependent Cost, Time Windows |
| 3 | HFVRP | Heterogeneous Fleets | 20 | LDVRPB | Load Dependent Cost, Backhuals |
| 4 | VRPFD | Fixed and Dependent Cost | 21 | MDPVRP | Multiple Depots, Periodic |
| 5 | OVRP | Open Routes | 22 | VFMP/ VFMP-F | Heterogeneous Fleets, Fixed and Dependent cost |
| 6 | VRPTW/H FVRPTW | Time windows | 23 | VFMP-V | Heterogeneous Fleets, Variable Cost |
| 7 | MDVRP/H FMDVRP | Multiple Depots | 24 | VFMP-FV | Heterogeneous Fleets, Mixed Cost |
| 8 | VRPB/HFV RPB | Backhuals | 25 | OVRPTW | Open Routes, Time Windows |

(continued)

| Problem number | Problem name | Problem description | Problem number | Problem name | Problem description |
|---|---|---|---|---|---|
| 9 | VRPPD/HF VRPD | Pick-up and Delivery | 26 | TDVRPTW | Time Dependence, Time Windows |
| 10 | MDVRPT W | Multiple Depots, Time Windows | 27 | MDPVRPTW | Multiple Depots, Periodic, Time Windows |
| 11 | VRPBTW | Backhuals, Time Windows | 28 | MTVRP | Multiple Trips |
| 12 | VRPPDTW | Pick-up and Delivery, Time Windows | 29 | MTVRPB | Multiple Trips, Backhuals |
| 13 | VRPC | Cumulative Cost | 30 | MTVRPPD | Multiple Trips, Pick and Delivery |
| 14 | SVRP | Split Delivery | 31 | MTVRPTW | Multiple Trips, Time Windows |
| 15 | PVRP | Periodic | 32 | MTVRPBTW | Multiple Trips, Backhuals, Time Windows |
| 16 | SVRPTW | Split Delivery, Time Windows | 33 | DCVRP | Distance constrained capacitated VRP |
| 17 | PVRPTW | Periodic, Time Windows(periodic) | | | |

In step S2, the operations research and optimization system 100 obtains, based on the feature of the data of the current application scenario and a pre-trained hyperparameter inference model, a hyperparameter of an operations research and optimization algorithm that corresponds to the feature of the data of the current application scenario.

In this embodiment of this application, the hyperparameter inference model is used to obtain, through inference based on the input feature of the data, the hyperparameter of the operations research and optimization algorithm that corresponds to the feature of the data of the current application scenario. The hyperparameter inference model is obtained by pre-training based on training data obtained in the historical application scenario, and the training data is included in a training data set. The hyperparameter inference model may be an existing machine learning model that can implement a hyperparameter inference function after training. A type of a machine learning model is not specifically limited in this embodiment of this application.

Optionally, before step S2, the method may further include: determining the operations research and optimization algorithm based on an operations research and optimization task type configured by the user.

Specifically, the task type may also be uploaded by the user to the operations research and optimization system 100 through the graphical user interface GUI, or may be uploaded by the user through the application programming interface API. The task type includes: performing operations research and optimization calculation by using a single algorithm and performing operations research and optimization calculation by establishing an algorithm group.

When the user chooses to perform optimization by using the single algorithm, the operations research and optimization system selects, from a plurality of to-be-selected algorithms, an algorithm that meets a preset condition as the operations research and optimization algorithm of the current application scenario.

When the user chooses to perform optimization by establishing the algorithm group, the operations research and optimization system selects, based on a maximum quantity of parallel algorithms specified by the user, a corresponding quantity of algorithms that meet the preset condition from a plurality of to-be-selected algorithms as the operations research and optimization algorithm of the current application scenario. The preset condition includes: historical running time of the operations research and optimization algorithm is less than preset time, goodness of a historical calculation result is greater than preset goodness, or a variance of a historical calculation result is less than a preset variance.

In step S3, the operations research and optimization system performs operations research and optimization calculation on the data of the current application scenario by using the operations research and optimization algorithm and the hyperparameter obtained in step S2, to obtain a calculation result of the scenario.

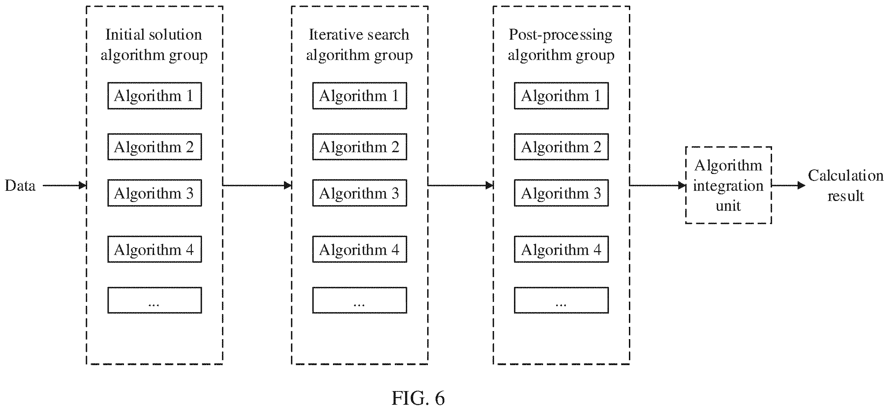

In this embodiment of this application, the operations research and optimization algorithm may use a structure of the single algorithm. When an optimization problem in a specific application scenario is resolved, a structure of combining a plurality of algorithms may also be used. FIG. 6 shows a structure of an operations research and optimization algorithm according to an embodiment of this application. As shown in FIG. 6, the structure of the operations research and optimization algorithm includes: an initial solution algorithm group, an iterative search algorithm group, a post-processing algorithm group, and an algorithm integration unit. Corresponding to the structure shown in FIG. 5, a hyperparameter of the operations research and optimization algorithm includes: a type and hyperparameter of each initial solution algorithm in the initial solution algorithm group, a type and hyperparameter of each iterative search algorithm in the iterative search algorithm group, a type and hyperparameter of each post-processing algorithm in the post-processing algorithm group, a connection relationship between the initial solution algorithm group and the iterative search algorithm group, a connection relationship between the iterative algorithm group and the post-processing algorithm group, and a quantity of cycles. The post-processing algorithm group and the algorithm integration unit may be in a fully connected relationship.

In this embodiment of this application, when optimization calculation is performed based on the obtained hyperparameter of the operations research and optimization algorithm and the obtained operations research and optimization algorithm, a calculation process includes: Each algorithm in the initial solution algorithm group obtains, based on the data of the current application scenario, an initial calculation result of a sub-problem corresponding to the current application scenario. The iterative search algorithm group obtains a calculation result of the sub-problem based on the initial calculation result of the sub-problem. The post-processing algorithm group obtains an initial calculation result of the current application scenario based on the calculation result of the sub-problem. The algorithm integration unit obtains a calculation result of the current application scenario based on the initial calculation result of the current application scenario. When the preset quantity of cycles is not reached, a hyperparameter of each algorithm in the initial solution algorithm group, the iterative search algorithm group, and the post-processing algorithm group is updated, and calculation is performed again. When the preset quantity of cycles is reached, the calculation result of the last quantity of cycles is output, and the operations research and optimization is ended. The sub-problem of the current application scenario is a problem determined based on a problem structure parameter of the data of the current application scenario, and the sub-problem is, for example, the problem shown in Table 1.

In step S4, the operations research and optimization system determines that the data of the current application scenario is abnormal data, optimizes, by using a hyperparameter optimization algorithm, the hyperparameter of the operations research and optimization algorithm that corresponds to the current application scenario, and obtains an optimized hyperparameter and an optimized calculation result.

In this embodiment of this application, the operations research and optimization system may analyze the feature of the data of the current application scenario, and determine whether the data of the current application scenario is abnormal data. Specifically, the feature of the data of the current application scenario may be matched with the feature of the data of the historical scenario in the training data set. When the matching fails, it indicates that a great change occurs between the feature of the data of the current application scenario and the feature of the data of the historical scenario. In this case, it may be determined that the data of the current application scenario is abnormal data. Matching calculation may be performed by using a correlation coefficient method, a Euclidean distance method, or another correlation method. When a calculation result does not meet the preset condition, it may be considered that the matching fails. A data feature matching method is not specifically limited in this embodiment of this application.

The operations research and optimization system may also analyze the calculation result of the current application scenario to determine whether the data of the current application scenario is abnormal data. Specifically, when goodness of the calculation result does not meet the preset condition, it may be determined that the data of the current application scenario is abnormal data. The goodness of the calculation result indicates a degree of the calculation result of the operations research and optimization algorithm closing to the optimal solution. For example, a difference $\eta$ may reflect the goodness of the calculation result, and $\eta$ may be obtained according to the following formula:

$$\eta = \frac{x - s}{(x + s)/2}$$

In the foregoing formula, x represents a calculation result obtained by performing operations research and optimization calculation on the data of the current application scenario, and s represents a relaxation solution obtained by performing operations research and optimization calculation on the data of the current application scenario. A smaller value of $\eta$ indicates greater goodness of the calculation result, and vice versa.

When it is determined that the data of the current application scenario is abnormal data, the user may be notified that the hyperparameter of the operations research and optimization algorithm does not match the data of the current application scenario, and hyperparameter optimization needs to be performed. When an update instruction fed back by the user is received, a hyperparameter optimization process is performed.

In this embodiment of this application, when performing hyperparameter optimization by using the hyperparameter optimization algorithm, the operations research and optimization system specifically substitutes the data of the current application scenario into the hyperparameter optimization algorithm for calculation, and obtains an optimization result based on a preset optimization condition. The optimization result includes: an optimized hyperparameter and an optimized calculation result. The optimization result may further include a limitation parameter in the hyperparameter optimization calculation task that is set by the user. After the hyperparameter optimization is completed, the feature of the data of the current application scenario and the optimized hyperparameter are stored in the training data set as training data, so as to update the hyperparameter inference model.

In step S5, the operations research and optimization system determines that the hyperparameter inference model is to be updated, and trains the hyperparameter inference model based on the training data in the training data set, to obtain an updated hyperparameter inference model.

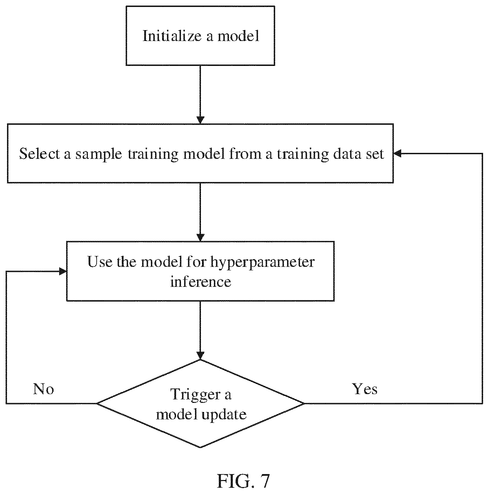

In this embodiment of this application, when the user feeds back the update instruction or a change amount of the training data in the training data set is greater than a threshold, it is determined that the hyperparameter inference model is to be updated. The update instruction may be an instruction fed back by the user when the user receives a notification indicating that the data of the current application scenario is determined as abnormal data. When it is determined that the hyperparameter inference model needs to be updated, a specific quantity of samples is selected from the training data set to update the hyperparameter inference model. FIG. 7 is a flowchart of training a hyperparameter inference model according to an embodiment of this application. As shown in FIG. 7, a training process includes: initializing the hyperparameter inference model; selecting, from a training data set based on a preset quantity of samples, a corresponding quantity of pieces of recently added training data, to perform model training; using the model for hyperparameter inference; and determining whether a model update is triggered. A condition of the model update herein includes: an update instruction of a user is received or a quantity of pieces of newly added data of a scenario in the training data set is greater than a preset threshold.

In the operations research and optimization method provided in this embodiment of this application, a hyperparameter of the operations research and optimization algorithm is obtained by using the hyperparameter inference model, so that development costs of the operations research and optimization algorithm are reduced, user waiting time is shortened, and user experience is improved. Dynamic training is performed on the hyperparameter inference model based on training data of a historical application scenario and training data of a current application scenario, so that an operations research and optimization system can adapt to data of a changing scenario, accuracy of a result of operations research and optimization calculation is improved, and solution efficiency and goodness of an optimization result can be maintained without decreasing.

Based on the operations research and optimization method embodiment shown in FIG. 5, this application further provides an operations research and optimization system 100 with the structure shown in FIG. 1. As shown in FIG. 1, the operations research and optimization system 100 includes a calculation module 101 and a hyperparameter configuration module 102.

The calculation module 101 is configured to obtain data of a current application scenario and a feature of the data.

The hyperparameter configuration module 102 is configured to obtain a hyperparameter of an operations research and optimization algorithm based on the feature of the data and a hyperparameter inference model.

The calculation module 101 is further configured to perform operations research and optimization calculation on the data of the current application scenario by using the hyperparameter and the operations research and optimization algorithm, to obtain a calculation result.

The hyperparameter inference model is obtained through dynamic training based on training data obtained in a historical application scenario and/or training data obtained in the current application scenario.

In a possible implementation, the hyperparameter configuration module 102 is specifically configured to: input the feature of the data to the hyperparameter inference model, and obtain, based on inference of the hyperparameter inference model, the hyperparameter of the operations research and optimization algorithm that corresponds to the feature of the data.

In a possible implementation, the hyperparameter configuration module 102 is further specifically configured to: analyze the feature of the data, and determine that the data of the current application scenario is abnormal data, where the feature of the data includes one or more of the following features: distribution of the data, a user weight preference parameter in the data, and a problem structure parameter of the data.

In a possible implementation, the hyperparameter configuration module 102 is further specifically configured to:

analyze the calculation result; and
when goodness of the calculation result does not meet a preset condition, determine that the data of the current application scenario is abnormal data.

In a possible implementation, the hyperparameter configuration module 102 is further specifically configured to:

optimize the hyperparameter of the operations research and optimization algorithm by using a hyperparameter optimization algorithm, to obtain an optimized hyperparameter and an optimized calculation result.

In a possible implementation, the hyperparameter configuration module 102 is further specifically configured to: record the abnormal data and the optimized calculation result corresponding to the abnormal data into a training data set used to train the hyperparameter inference model.

In a possible implementation, the hyperparameter configuration module 102 is further specifically configured to: determine that the hyperparameter inference model is to be updated, and train the hyperparameter inference model based on training data in the training data set, to obtain an updated hyperparameter inference model.

In a possible implementation, the calculation module 101 is specifically configured to:

obtain the data of the current application scenario that is uploaded by a user through a user interface or an application programming interface; and
perform feature extraction on the data of the current application scenario, to obtain the feature of the data.

In a possible implementation, the calculation module 101 is further specifically configured to:

obtain an operations research and optimization task type configured by the user; and
determine the operations research and optimization algorithm based on the task type.

Division into the modules in this embodiment of this application is an example, and is merely logical function division. During actual implementation, another division manner may be used. In addition, the functional modules in the embodiments of this application may be integrated in one processor, or may exist as physically independent. Alternatively, two or more modules may be integrated into one module. The integrated module may be implemented in a form of hardware, or may be implemented in a form of a software functional module.

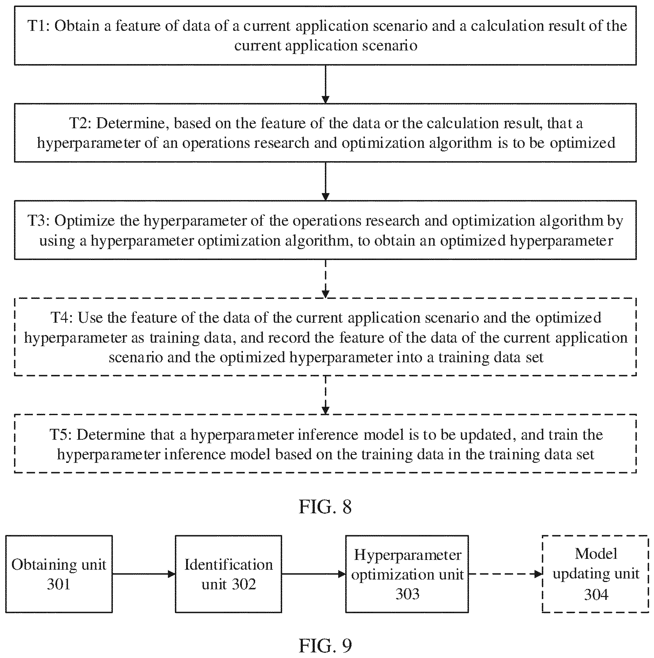

Based on the operations research and optimization method embodiment shown in FIG. 5, this application further provides a hyperparameter optimization method for an operations research and optimization algorithm. The following describes an example of the hyperparameter optimization method with reference to FIG. 8.

As shown in FIG. 8, the method includes step T1 to step T5.

In step T1, a feature of data of a current application scenario is first obtained, and then a calculation result is obtained by performing operations research and optimization calculation on the data of the current application scenario according to the operations research and optimization algorithm and based on a hyperparameter of the operations research and optimization algorithm.

In this embodiment of this application, the data of the foregoing scenario may be uploaded by a user to an operations research and optimization server through a user interface of an operations research and optimization client, or may be uploaded by a user through an application programming interface API. The hyperparameter of the operations research and optimization algorithm is obtained by a hyperparameter inference model based on the feature of the data of the current application scenario.

In step T2, a hyperparameter of the operations research and optimization algorithm is determined to be optimized based on the feature of the data of the current application scenario or the calculation result that is obtained in step T1.

In this embodiment of this application, in this step, the feature of the data may be matched with a feature of data in a training data set used to train the hyperparameter inference model. If the matching fails, it is determined that the data of the current application scenario is abnormal data, and it is determined that the hyperparameter of the operations research and optimization algorithm is to be optimized.

Alternatively, if the goodness of the calculation result of the data does not meet a preset condition, it is determined that the data of the current application scenario is abnormal data, and it is determined that the hyperparameter of the operations research and optimization algorithm is to be optimized. The preset condition herein includes: The goodness of the calculation result is greater than a preset goodness value.

In step T3, the hyperparameter of the operations research and optimization algorithm is optimized by using a hyperparameter optimization algorithm, to obtain an optimized hyperparameter.

In step T4, the feature of the data of the current application scenario and the optimized hyperparameter are used as training data, and are recorded into the training data set used to train the hyperparameter inference model, to update the hyperparameter inference model, so as to improve inference accuracy of the hyperparameter inference model.

In step T5, it is determined that the hyperparameter inference model is to be updated, and the hyperparameter inference model is trained based on training data in the training data set, to obtain an updated hyperparameter inference model.

In this embodiment of this application, when the user feeds back the update instruction or a change amount of the training data in the training data set is greater than a threshold, it is determined that the hyperparameter inference model is to be updated. The update instruction is an instruction fed back by the user when the user receives a notification that is sent by the server and that indicates the data of the current application scenario is determined as abnormal data.

According to the hyperparameter optimization method for the operations research and optimization algorithm provided in this embodiment of this application, a problem that a hyperparameter of an operations research and optimization algorithm in an operations research and optimization system does not match a scenario due to a data change of a scenario can be resolved. Therefore, solution efficiency and goodness of an optimization result can be maintained without decreasing, and accuracy of the operations research and optimization is improved.

Based on the hyperparameter optimization method embodiment of the operations research and optimization algorithm shown in FIG. 8, this application further provides a hyperparameter optimization apparatus for the operations research and optimization algorithm. The hyperparameter optimization apparatus is applied to the hyperparameter configuration module shown in FIG. 1, and is configured to implement the hyperparameter optimization method for the operations research and optimization algorithm. As shown in FIG. 9, the hyperparameter optimization apparatus includes an obtaining unit 301, an identification unit 302, and a hyperparameter optimization unit 303.

The obtaining unit 301 is configured to obtain a feature of data of a current application scenario, and a calculation result obtained by performing operations research and optimization calculation on the data of the current application scenario according to an operations research and optimization algorithm and a hyperparameter of the operations research and optimization algorithm;

The identification unit 302 is configured to determine, based on the feature of the data of the current application scenario or the calculation result, that the hyperparameter of the operations research and optimization algorithm is to be optimized.

The hyperparameter optimization unit 303 is configured to optimize the hyperparameter of the operations research and optimization algorithm by using a hyperparameter optimization algorithm, to obtain an optimized hyperparameter.

In a possible implementation, the identification unit 302 is specifically configured to:

if the feature of the data of the current application scenario fails to be matched with a feature of data in a training data set used to train a hyperparameter inference model, determine that the hyperparameter of the operations research and optimization algorithm is to be optimized; or
if goodness of the calculation result does not meet a preset condition, determine that the hyperparameter of the operations research and optimization algorithm is to be optimized.

In a possible implementation, the hyperparameter of the operations research and optimization algorithm is obtained by performing inference by using the hyperparameter inference model based on the feature of the data of the current application scenario.

In a possible implementation, the identification unit 302 is further configured to:
record the feature of the data of the current application scenario and the optimized hyperparameter into the training data set used to train the hyperparameter inference model.

In a possible implementation, the hyperparameter optimization apparatus further includes:
a model updating unit 304, configured to: determine that the hyperparameter inference model is to be updated, and train the hyperparameter inference model based on training data in the training data set, to obtain an updated hyperparameter inference model.

In the foregoing apparatus embodiments, all or some functions of the apparatuses may be implemented by using software, hardware, or a combination thereof. When the software is used to implement the embodiments, all or some of the embodiments may be implemented in a form of a computer program product. A computer program product that provides an operations research and optimization system includes one or more computer instructions. When the computer program instructions are loaded and executed on a computer, all or some of the procedures or functions are generated according to FIG. 5 and/or FIG. 8 in the method embodiments of this application.

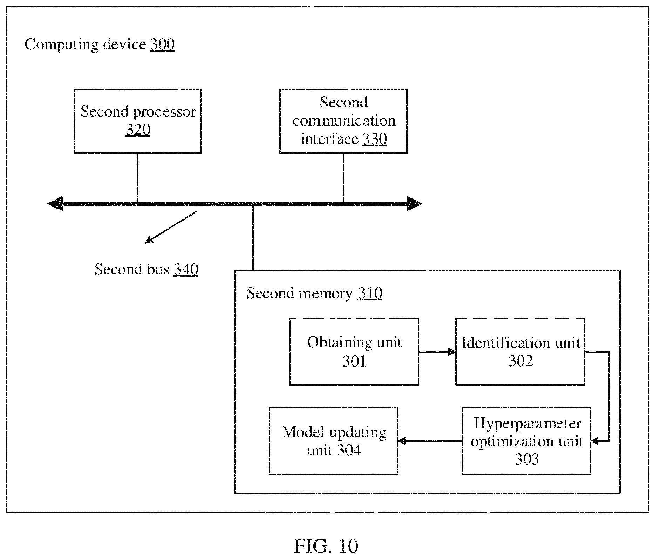

The hyperparameter optimization apparatus shown in FIG. 9 may be independently deployed on one or more computing devices in any environment. FIG. 10 is a schematic diagram of a structure of hardware of a computing device 300 on which a hyperparameter optimization apparatus is deployed. As shown in FIG. 10, the computing device 300 includes a second memory 310, a second processor 320, a second communication interface 330, and a second bus 340. The second memory 310, the second processor 320, and the second communication interface 330 implement a communication connection to each other by using the second bus 340. The second memory 310 may be one or any combination of a read only memory (read only memory, ROM), a random access memory (random access memory, RAM), a hard disk, and a flash memory. The second memory 310 may store a program, including a program that implements functions of the obtaining unit 301, the identification unit 302, the hyperparameter optimization unit 303, and the model updating unit 304. When the program stored in the second memory 310 is executed by the second processor 320, the second processor 320 and the second communication interface 330 are configured to provide a hyperparameter optimization service method for an operations research and optimization algorithm for a user. The second memory 310 may further store data of an operations research and optimization scenario and data such as a feature of the data, the operations research and optimization algorithm, a hyperparameter optimization algorithm, and an optimized calculation result.

The second processor 320 may be a central processing unit (central processing unit, CPU), an application-specific integrated circuit (application-specific integrated circuit, ASIC), a GPU, or any combination thereof. The second processor 320 may include one or more chips. Alternatively, the second processor 320 may include an AI accelerator, for example, a neural processing unit (neural processing unit, NPU).

The second communication interface 330 is a transceiver module such as a transceiver, to implement communication between the computing device 300 and another computing device or a communication network.

The second bus 340 includes a channel used for transmitting information between components of the computing device 300 (for example, the second memory 310, the second processor 320, the second communication interface 330).

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

**Claims**

1.  An operations research and optimization method, comprising:

    obtaining data of a current application scenario and a feature of the data;
    obtaining a hyperparameter of an operations research and optimization algorithm based on the feature of the data and a hyperparameter inference model; and
    performing operations research and optimization calculation on the data of the current application scenario by using the hyperparameter and the operations research and optimization algorithm, to obtain a calculation result, wherein
    the hyperparameter inference model is obtained through dynamic training based on training data obtained in a historical application scenario and/or training data obtained in the current application scenario.

2.  The method according to claim 1, wherein the obtaining a hyperparameter of an operations research and optimization algorithm based on the feature of the data and a hyperparameter inference model comprises:
    inputting the feature of the data to the hyperparameter inference model, and obtaining, based on inference of the hyperparameter inference model, the hyperparameter of the operations research and optimization algorithm that corresponds to the feature of the data.

**3.** The method according to claim 1 or 2, wherein the method further comprises:
analyzing the feature of the data, and determining that the data of the current application scenario is abnormal data, wherein the feature of the data comprises one or more of the following features: distribution of the data, a user weight preference parameter in the data, and a problem structure parameter of the data.

**4.** The method according to any one of claims 1 to 3, wherein the method further comprises:

analyzing the calculation result; and
when goodness of the calculation result does not meet a preset condition, determining that the data of the current application scenario is abnormal data.

**5.** The method according to claim 3 or 4, wherein the method further comprises:
optimizing the hyperparameter of the operations research and optimization algorithm by using a hyperparameter optimization algorithm, to obtain an optimized hyperparameter and an optimized calculation result.

**6.** The method according to claim 5, wherein the method further comprises:
recording the abnormal data and the optimized calculation result corresponding to the abnormal data into a training data set used to train the hyperparameter inference model.

**7.** The method according to claim 6, wherein the method further comprises:
determining that the hyperparameter inference model is to be updated, and training the hyperparameter inference model based on training data in the training data set, to obtain an updated hyperparameter inference model.

**8.** The method according to any one of claims 1 to 7, wherein the obtaining data of a current application scenario and a feature of the data comprises:

obtaining the data of the current application scenario that is uploaded by a user through a user interface or an application programming interface; and
performing feature extraction on the data of the current application scenario, to obtain the feature of the data.

**9.** The method according to any one of claims 1 to 8, wherein the method further comprises:

obtaining an operations research and optimization task type configured by the user; and
determining the operations research and optimization algorithm based on the task type.

**10.** A hyperparameter optimization method for an operations research and optimization algorithm, comprising:

obtaining a feature of data of a current application scenario, and a calculation result obtained by performing operations research and optimization calculation on the data of the current application scenario according to the operations research and optimization algorithm and based on a hyperparameter of the operations research and optimization algorithm;
determining, based on the feature of the data of the current application scenario or the calculation result, that the hyperparameter of the operations research and optimization algorithm is to be optimized; and
optimizing the hyperparameter of the operations research and optimization algorithm by using a hyperparameter optimization algorithm, to obtain an optimized hyperparameter.

**11.** The method according to claim 10, wherein the determining, based on the feature of the data of the current application scenario or the calculation result, that the hyperparameter of the operations research and optimization algorithm is to be optimized comprises:

if the feature of the data of the current application scenario fails to be matched with a feature of data in a training data set used to train a hyperparameter inference model, determining that the hyperparameter of the operations research and optimization algorithm is to be optimized; or
if goodness of the calculation result does not meet a preset condition, determining that the hyperparameter of the operations research and optimization algorithm is to be optimized.

**12.** The method according to claim 10 or 11, wherein the hyperparameter of the operations research and optimization algorithm is obtained by performing inference by using the hyperparameter inference model based on the feature of the data of the current application scenario.

13. The method according to claim 12, wherein the method further comprises:
recording the feature of the data of the current application scenario and the optimized hyperparameter into the training data set used to train the hyperparameter inference model.

14. The method according to claim 13, wherein the method further comprises:
determining that the hyperparameter inference model is to be updated, and training the hyperparameter inference model based on training data in the training data set, to obtain an updated hyperparameter inference model.

15. An operations research and optimization system, comprising:

a calculation module, configured to obtain data of a current application scenario and a feature of the data; and
a hyperparameter configuration module, configured to obtain a hyperparameter of an operations research and optimization algorithm based on the feature of the data and a hyperparameter inference model, wherein
the calculation module is further configured to perform operations research and optimization calculation on the data of the current application scenario by using the hyperparameter and the operations research and optimization algorithm, to obtain a calculation result; and
the hyperparameter inference model is obtained through dynamic training based on training data obtained in a historical application scenario and/or training data obtained in the current application scenario.

16. The system according to claim 15, wherein the hyperparameter configuration module is specifically configured to:
input the feature of the data to the hyperparameter inference model, and obtain, based on inference of the hyperparameter inference model, the hyperparameter of the operations research and optimization algorithm that corresponds to the feature of the data.

17. The system according to claim 15 or 16, wherein the hyperparameter configuration module is further configured to:
analyze the feature of the data, and determine that the data of the current application scenario is abnormal data, wherein the feature of the data comprises one or more of the following features: distribution of the data, a user weight preference parameter in the data, and a problem structure parameter of the data.

18. The system according to any one of claims 15 to 17, wherein the hyperparameter configuration module is further configured to:

analyze the calculation result; and
when goodness of the calculation result does not meet a preset condition, determine that the data of the current application scenario is abnormal data.

19. The system according to claim 17 or 18, wherein the hyperparameter configuration module is further configured to:
optimize the hyperparameter of the operations research and optimization algorithm by using a hyperparameter optimization algorithm, to obtain an optimized hyperparameter and an optimized calculation result.

20. The system according to claim 19, wherein the hyperparameter configuration module is further configured to:
record the abnormal data and the optimized calculation result corresponding to the abnormal data into a training data set used to train the hyperparameter inference model.

21. The system according to claim 20, wherein the hyperparameter configuration module is further configured to:
determine that the hyperparameter inference model is to be updated, and train the hyperparameter inference model based on training data in the training data set, to obtain an updated hyperparameter inference model.

22. The system according to any one of claims 15 to 21, wherein the calculation module is specifically configured to:

obtain the data of the current application scenario that is uploaded by a user through a user interface or an application programming interface; and
perform feature extraction on the data of the current application scenario, to obtain the feature of the data.

23. The system according to any one of claims 15 to 22, wherein the calculation module is further configured to:

obtain an operations research and optimization task type configured by the user; and
determine the operations research and optimization algorithm based on the task type.

24. A hyperparameter optimization apparatus for an operations research and optimization algorithm, comprising:

an obtaining unit, configured to obtain a feature of data of a current application scenario, and a calculation result obtained by performing operations research and optimization calculation on the data of the current application scenario according to an operations research and optimization algorithm and a hyperparameter of the operations research and optimization algorithm;

an identification unit, configured to determine, based on the feature of the data of the current application scenario or the calculation result, that the hyperparameter of the operations research and optimization algorithm is to be optimized; and

a hyperparameter optimization unit, configured to optimize the hyperparameter of the operations research and optimization algorithm by using a hyperparameter optimization algorithm, to obtain an optimized hyperparameter.

25. The apparatus according to claim 24, wherein the identification unit is specifically configured to:

if the feature of the data of the current application scenario fails to be matched with a feature of data in a training data set used to train a hyperparameter inference model, determine that the hyperparameter of the operations research and optimization algorithm is to be optimized; or

if goodness of the calculation result does not meet a preset condition, determine that the hyperparameter of the operations research and optimization algorithm is to be optimized.

26. The apparatus according to claim 24 or 25, wherein the hyperparameter of the operations research and optimization algorithm is obtained by performing inference by using the hyperparameter inference model based on the feature of the data of the current application scenario.

27. The apparatus according to claim 26, wherein the identification unit is further configured to:
record the feature of the data of the current application scenario and the optimized hyperparameter into the training data set used to train the hyperparameter inference model.

28. The apparatus according to claim 27, wherein the hyperparameter optimization apparatus further comprises:
a model updating unit, configured to: determine that the hyperparameter inference model is to be updated, and train the hyperparameter inference model based on training data in the training data set, to obtain an updated hyperparameter inference model.

29. A computing device, wherein the computing device comprises a memory and a processor, the memory is configured to store computer instructions, and the processor executes the computer instructions stored in the memory, to perform the method according to any one of claims 1 to 9 or the method according to any one of claims 10 to 14.

30. A computer-readable storage medium, wherein the computer-readable storage medium stores computer program code, and when the computer program code is executed by a computing device, the computing device performs the method according to any one of claims 1 to 9 or the method according to any one of claims 10 to 14.

Operations research and optimization system 100

Calculation module
101

Hyperparameter
configuration module
102

User

FIG. 1

Cloud environment

Cloud data center

Operations research and optimization system 100

Cloud service platform

Operations research and optimization service

User

FIG. 2

FIG. 3

Computing device 200

First processor 202

First communication interface 203

First bus 204

First memory 201

FIG. 4

S1: Obtain data of a current application scenario and a feature of the data

S2: Obtain a hyperparameter of an operations research and optimization algorithm based on the feature of the data and a hyperparameter inference model

S3: Perform operations research and optimization calculation on the data of the current application scenario by using the hyperparameter and the operations research and optimization algorithm, to obtain a calculation result

S4: Determine that the data of the current application scenario is abnormal data, and optimize the hyperparameter of the operations research and optimization algorithm

S5: Determine that the hyperparameter inference model is to be updated, and train the hyperparameter inference model based on training data in a training data set

FIG. 5

FIG. 6

Initialize a model

Select a sample training model from a training data set

Use the model for hyperparameter inference

No    Trigger a model update    Yes

FIG. 7

T1: Obtain a feature of data of a current application scenario and a calculation result of the current application scenario

↓

T2: Determine, based on the feature of the data or the calculation result, that a hyperparameter of an operations research and optimization algorithm is to be optimized

↓

T3: Optimize the hyperparameter of the operations research and optimization algorithm by using a hyperparameter optimization algorithm, to obtain an optimized hyperparameter

↓

T4: Use the feature of the data of the current application scenario and the optimized hyperparameter as training data, and record the feature of the data of the current application scenario and the optimized hyperparameter into a training data set

↓

T5: Determine that a hyperparameter inference model is to be updated, and train the hyperparameter inference model based on the training data in the training data set

FIG. 8

| Obtaining unit 301 | → | Identification unit 302 | → | Hyperparameter optimization unit 303 | - - → | Model updating unit 304 |

FIG. 9

Computing device 300

Second processor
320

Second
communication
interface 330

Second bus 340

Second memory 310

Obtaining unit
301

Identification unit
302

Model updating
unit 304

Hyperparameter
optimization unit
303

FIG. 10

## INTERNATIONAL SEARCH REPORT

| International application No. |
| --- |
| **PCT/CN2021/121050** |

| A. | CLASSIFICATION OF SUBJECT MATTER |
| --- | --- |
| | G06Q 10/06(2012.01)i;  G06N 3/04(2006.01)i |

According to International Patent Classification (IPC) or to both national classification and IPC

| B. | FIELDS SEARCHED |
| --- | --- |

Minimum documentation searched (classification system followed by classification symbols)

G06Q, G06N

Documentation searched other than minimum documentation to the extent that such documents are included in the fields searched

Electronic data base consulted during the international search (name of data base and, where practicable, search terms used)

CNKI, CNPAT, WPI, EPODOC: 超参数, 配置, 设置, 优化, 场景, 异常, 遗传算法, 启发式算法, 贪心算法, 模拟退火, 蚁群, 神经网络, hyper 1w parameter, set+, configure, optimiz+, abnorm+, greedy, GA, genetic, ant 1w colony, neural 1w network, simulated 1w annealing

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 112116162 A (CENTRAL CHINA BRANCH, STATE GRID CORPORATION OF CHINA et al.) 22 December 2020 (2020-12-22) <br> description paragraphs [0042]-[0173] | 1-2, 8-9, 15-16, 22-23, 29-30 |
| X | CN 111178626 A (SUZHOU UNIVERSITY OF SCIENCE AND TECHNOLOGY) 19 May 2020 (2020-05-19) <br> description paragraphs [0123]-[0249] | 1-2, 8-9, 15-16, 22-23, 29-30 |
| A | CN 111612528 A (CHINA MOBILE GROUP JIANGSU COMPANY LIMITED et al.) 01 September 2020 (2020-09-01) <br> entire document | 1-30 |
| A | CN 109447277 A (XIAMEN DATAEXA INFORMATION TECHNOLOGY CO., LTD.) 08 March 2019 (2019-03-08) <br> entire document | 1-30 |
| A | US 10572823 B1 (CA, INC.) 25 February 2020 (2020-02-25) <br> entire document | 1-30 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 December 2021** | **30 December 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/121050**

| Patent document cited in search report | | | Publication date (day/month/year) | Patent family member(s) | Publication date (day/month/year) |
|---|---|---|---|---|---|
| CN | 112116162 | A | 22 December 2020 | None | |
| CN | 111178626 | A | 19 May 2020 | None | |
| CN | 111612528 | A | 01 September 2020 | None | |
| CN | 109447277 | A | 08 March 2019 | None | |
| US | 10572823 | B1 | 25 February 2020 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110117226X